# EUROPEAN PATENT APPLICATION

(11) **EP 3 046 312 A1**
(43) Date of publication of application: **20.07.2016**
(21) Application number: 14800735.4
(22) Date of filing: 16.06.2014
(51) Int. Cl.: H04L 29/12

(54) **METHOD AND DEVICE FOR PROCESSING IDENTIFICATION INFORMATION**

(30) Priority: 12.09.2013 CN 201310416171
(71) Applicant: ZTE Corporation, Shenzhen, Guangdong 518057 (CN)
(72) Inventor: GUO, Lei, Shenzhen Guangdong Province 518057 (CN); DING, Yan, Shenzhen Guangdong Province 518057 (CN)
(74) Representative: Novagraaf Technologies
(86) International application number: PCT/CN2014/079987
(87) International publication number: WO 2014/187423

(57) **Abstract**

Provided are methods and devices for processing identification information. The method comprises: receiving a message carrying an Internet Protocol (IP) address of a mobile terminal, transmitting a request for acquiring identification information of the mobile terminal corresponding to the IP address, and receiving the identification information of the mobile terminal. The technical solution solves the problem of an inability to acquire the identification information of a mobile terminal in the relevant art, and enables the acquisition of the identification information of the terminal.

## Description

### Technical Field

The present disclosure relates to the field of communications, and in particular to methods and devices for processing identification information.

### Background

When surfing the Internet, a mobile terminal can select two kinds of access points, namely, Wireless Application Protocol (WAP) and NET. The WAP applies the mode of Terminal+WAP Gateway+WAP Server, in which all requests of a user will be processed by the WAP gateway, so that the WAP gateway can complete WAP-WEB protocol conversion to save network traffic and provide compatibility with existing WEB applications. From a technical view, the WAP gateway is just a host providing proxy services. A standard WAP gateway only realizes the function of Hyper Text Transfer Protocol (HTTP) proxy, and does not realize the functions of Local Area Network (LAN) gateways such as routing and Network Address Translation (NAT), which leads to the limitation of using the WAP gateway in applications and websites. The NET applies the mode of Terminal+Server, in which the terminal possesses full Internet access right, and this is equivalent to a direct connection to Internet. Therefore, more and more users choose NET as the access point to surf the Internet.

When a mobile terminal accesses a website in a WAP mode, the request first arrives at a WAP gateway which is generally provided by a network operator, and then the WAP gateway conducts the forwarding to a target WAP website. According to the link protocol of 3rd Generation Partnership Project (3GPP), a mobile terminal automatically uploads identification information (for example, International Mobile Subscriber Identity (IMSI)); after obtaining the IMSI, the gateway obtains the number of the mobile terminal bound with the IMSI from a Mobile Information Service Centre (MISC) system (the MISC obtains the number of the mobile terminal by calling basic network data of the mobile operator); then, the gateway adds the number of the mobile terminal into Http Header; in this way, the operator can process the user's request at the gateway. If the target mobile Internet website needs the number of the mobile terminal, the operator having gateways can be asked to add the IMSI to request information.

The inventor finds that since the NET mode enables a direct connection to the Internet without a gateway, when this mode is adopted, the accessed website cannot acquire the identification information of the mobile terminal, even the operator can do nothing about it, thereby causing some inconvenience to the processing of the website. In view of this problem, no solution has been put forward so far.

### Summary

The embodiments of the present disclosure provide methods and devices for processing identification information, to at least solve the problem of an inability to acquire the identification information of a mobile terminal in the relevant art.

According to one aspect of the embodiments of the present disclosure, a method for processing identification information is provided, including: receiving a message carrying an Internet Protocol (IP) address of a mobile terminal; transmitting a request for acquiring identification information of the mobile terminal corresponding to the IP address, and receiving the identification information of the mobile terminal.

Transmitting the request for acquiring the identification information of the mobile terminal corresponding to the IP address may include: searching for a network element corresponding to the IP address, wherein the network element saves a corresponding relationship between the IP address and the identification information of the mobile terminal; transmitting the request for acquiring the identification information of the mobile terminal corresponding to the IP address to the network element.

The network element may save a corresponding relationship between Identification information of mobile terminals and IP addresses in a preset geographical scope, wherein the corresponding relationship is established after the mobile terminals access a network and are assigned with the IP addresses.

Transmitting the request for acquiring the identification information of the mobile terminal corresponding to the IP address to the network element may include: transmitting authentication information to the network element; after the network element performs authentication successfully according to the authentication information, transmitting the request for acquiring the identification information of the mobile terminal corresponding to the IP address to the network element.

In a condition that the message carrying the IP address of the mobile terminal is a request message for accessing a website, after receiving the identification information of the mobile terminal, the method may further include: taking the identification information as a unique identification of the mobile terminal in the website.

After taking the identification information as the unique identification of the mobile terminal in the website, the method may further include: generating a random password and transmitting the random password to the mobile terminal, wherein the mobile terminal logs in the website using the identification information of the mobile terminal and the random password.

According to another aspect of the embodiments of the present disclosure, a method for processing identification information is provided, including: receiving a request for acquiring identification information of a mobile terminal corresponding to an IP address; searching for the identification information of the mobile terminal corresponding to the IP address according to a corresponding relationship between the IP address and the identification information of the mobile terminal; transmitting the found identification information as a response message to the request.

The corresponding relationship may be a corresponding relationship between Identification information of mobile terminals and IP addresses in a preset geographical scope, wherein the corresponding relationship is established after the mobile terminals access a network and are assigned with the IP addresses.

Searching for the identification information of the mobile terminal corresponding to the IP address according to the corresponding relationship may include: receiving authentication information; after authentication is performed successfully according to the authentication information, searching for the identification information of the mobile terminal corresponding to the IP address according to the corresponding relationship.

According to another aspect of the embodiments of the present disclosure, a device for processing identification information is provided, including: a first receiving component, which is configured to receive a message carrying an IP address of a mobile terminal; a transmitting component, which is configured to transmit a request for acquiring identification information of the mobile terminal corresponding to the IP address; a second receiving component, which is configured to receive the identification information of the mobile terminal.

The transmitting component may include: a query unit, which is configured to search for a network element corresponding to the IP address, wherein the network element saves a corresponding relationship between the IP address and the identification information of the mobile terminal; a transmitting unit, which is configured to transmit the request for acquiring the identification information of the mobile terminal corresponding to the IP address to the network element.

The network element may save a corresponding relationship between Identification information of mobile terminals and IP addresses in a preset geographical scope, wherein the corresponding relationship is established after the mobile terminals access a network and are assigned with the IP addresses.

The transmitting component may be configured to transmit authentication information to the network element, and transmit, after the network element performs authentication successfully according to the authentication information, the request for acquiring the identification information of the mobile terminal corresponding to the IP address to the network element.

In a condition that the message carrying the IP address of the mobile terminal is a request message for accessing a website, after receiving the identification information of the mobile terminal, the device may further include: a registration component, which is configured to take the identification information as a unique identification of the mobile terminal in the website.

The device may further include: a generation component, which is configured to generate a random password and transmit the random password to the mobile terminal, wherein the mobile terminal logs in the website using the identification information of the mobile terminal and the random password.

According to another aspect of the embodiments of the present disclosure, a device for processing identification information is provided, including: a third receiving component, which is configured to receive a request for acquiring identification information of a mobile terminal corresponding to an IP address; a searching component, which is configured to search for the identification information of the mobile terminal corresponding to the IP address according to a corresponding relationship between the IP address and the identification information of the mobile terminal; a second transmitting component, which is configured to transmit the found identification information as a response message to the request.

The corresponding relationship may be a corresponding relationship between Identification information of mobile terminals and IP addresses in a preset geographical scope, wherein the corresponding relationship is established after the mobile terminals access a network and are assigned with the IP addresses.

The searching component may include: an authentication unit, which is configured to receive authentication information; a query unit, which is configured to search for the identification information of the mobile terminal corresponding to the IP address according to the corresponding relationship, after authentication is performed successfully according to the authentication information.

By receiving a message carrying an IP address of a mobile terminal, transmitting a request for acquiring identification information of the mobile terminal corresponding to the IP address and receiving the identification information of the mobile terminal, the embodiments of the present disclosure solve the problem of an inability to acquire the identification information of a mobile terminal in the relevant art and enable the acquisition of the identification information of the terminal.

### Brief Description of the Drawings

For a better understanding of the present disclosure, accompanying drawings described hereinafter are provided to constitute one part of the application; the schematic embodiments of the present disclosure and the description thereof are used to illustrate the present disclosure but to limit the present disclosure improperly. In the accompanying drawings:
Fig. 1 is a flowchart of a method for processing identification information according to an embodiment of the present disclosure;
Fig. 2 is an example flowchart of searching for identification information of a mobile terminal from a network element according to an embodiment of the present disclosure;
Fig. 3 is a flowchart involving authentication according to an embodiment of the present disclosure;
Fig. 4 is a flowchart of another method for processing identification information according to an embodiment of the present disclosure;
Fig. 5 is a first structure diagram of a device for processing identification information according to an embodiment of the present disclosure; and
Fig. 6 is a second structure diagram of a device for processing identification information according to an embodiment of the present disclosure.

### Detailed Description of the Embodiments

First, following explanations are applicable to part vocabularies or terminologies appearing during the description of the embodiments of the present disclosure.

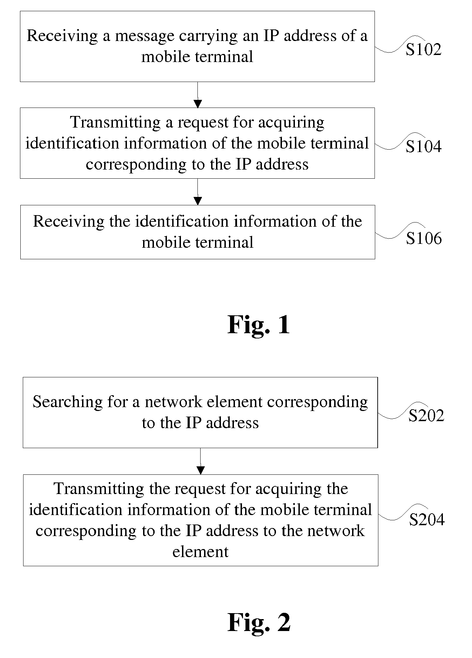

In an embodiment, a method for processing identification information is provided. Fig. 1 is a flowchart of a method for processing identification information according to the embodiment of the present disclosure; as shown in Fig. 1, the process includes the following steps:
S102: receiving a message carrying an IP address of a mobile terminal.
S104: transmitting a request for acquiring identification information of the mobile terminal corresponding to the IP address.
S106: receiving the identification information of the mobile terminal.

The IP address of a mobile terminal can be obtained in the NET mode. Through the above steps, the identification information of the mobile terminal can be queried according to the IP address. This technology can be applied to websites or applied to any function entities needing to query the identification information of the mobile terminal. Thus, the problem of an inability to acquire the identification information of a mobile terminal in the relevant art is solved.

Optionally, the identification information of the mobile terminal may include at least one of the following: IMSI, International Mobile Equipment Identity (IMEI), the number of the mobile terminal. Or, the number of the mobile terminal is searched according to the IMSI after the IMSI is obtained.

Optionally, S104 may be implemented by setting different network elements in a network to save the corresponding relationship between the IP addresses and the identification information of mobile terminals. Fig. 2 is an example flowchart of searching for identification information of a mobile terminal from a network element according to the embodiment of the present disclosure; as shown in Fig. 2, the process may include the following steps:
S202: searching for a network element corresponding to the IP address, wherein the network element saves a corresponding relationship between the IP address and the identification information of the mobile terminal.
S204: transmitting the request for acquiring the identification information of the mobile terminal corresponding to the IP address to the network element.

Through the above steps, the network element saving the corresponding relationship can be found according to the IP address, and then the identification information of the mobile terminal can be found on the network element. In a network, multiple network elements may be configured to share the load of query; optionally, IP addresses saved on each network element may be divided according to a geographical scope. That is, the network element may save the corresponding relationship between Identification information of mobile terminals and IP addresses in a preset geographical scope, wherein the corresponding relationship is established after the mobile terminals access a network and are assigned with the IP addresses.

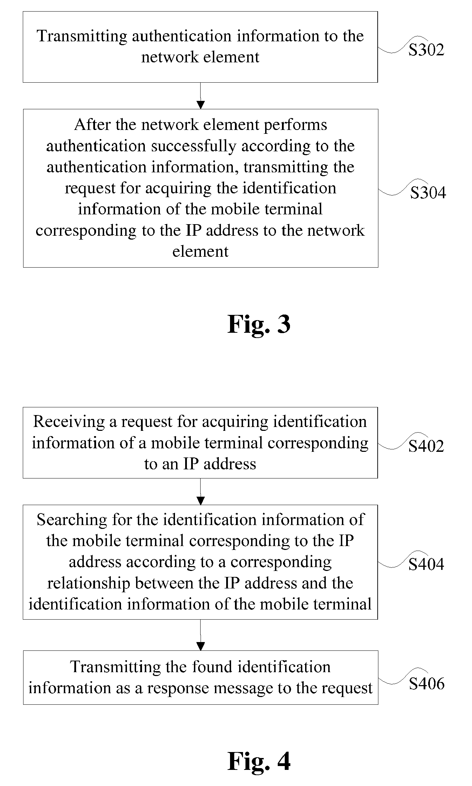

For safety reasons, in an example embodiment, a step of authentication may be added. Fig. 3 is a flowchart involving authentication according to the embodiment of the present disclosure; as shown in Fig. 3, the process includes the following steps:
S302: transmitting authentication information to the network element.
S304: after the network element performs authentication successfully according to the authentication information, transmitting the request for acquiring the identification information of the mobile terminal corresponding to the IP address to the network element.

The above steps can improve the safety of the process.

The above embodiments and example embodiments thereof can be applied to websites, which can acquire the identification information of mobile terminals through the above steps. If the message carrying the IP address of the mobile terminal is a request message for accessing a website, optionally, after receiving the identification information of the mobile terminal, the website may take the identification information as the unique identification of the mobile terminal in this website. Optionally, after taking the identification information as the unique identification of the mobile terminal in the website, the method may further include: generating a random password and transmitting the random password to the mobile terminal, wherein the mobile terminal logs in the website using the identification information of the mobile terminal and the random password.

Another embodiment also provides a method for processing identification information. Fig. 4 is a flowchart of another method for processing identification information according to the embodiment of the present disclosure; as shown in Fig. 4, the process includes the following steps:
S402: receiving a request for acquiring identification information of a mobile terminal corresponding to an IP address.
S404: searching for the identification information of the mobile terminal corresponding to the IP address according to a corresponding relationship between the IP address and the identification information of the mobile terminal.
S406: transmitting the found identification information as a response message to the request.

The steps shown in Fig. 4 correspond to the steps shown in Fig. 2. The above embodiment has given a description and no further description is needed here.

Optionally, the corresponding relationship may be a corresponding relationship between Identification information of mobile terminals and IP addresses in a preset geographical scope, wherein the corresponding relationship is established after the mobile terminals access a network and are assigned with the IP addresses.

Optionally, searching for the identification information of the mobile terminal corresponding to the IP address according to the corresponding relationship may include: receiving authentication information; after authentication is performed successfully according to the authentication information, searching for the identification information of the mobile terminal corresponding to the IP address according to the corresponding relationship.

The embodiments also provides two devices for processing identification information, which are configured to implement the methods shown in Fig. 2 and Fig. 4. Each step in the above embodiments and example embodiments thereof can be described as a component.

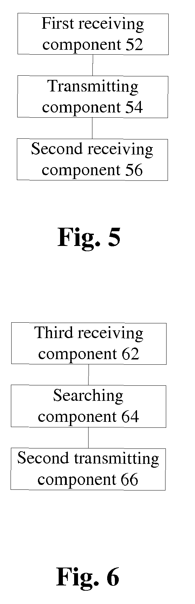

Fig. 5 is a first structure diagram of a device for processing identification information according to the embodiment of the present disclosure. As shown in Fig. 5, the device includes:
a first receiving component 52, which is configured to receive a message carrying an IP address of a mobile terminal;
a transmitting component 54, which is configured to transmit a request for acquiring identification information of the mobile terminal corresponding to the IP address;
a second receiving component 56, which is configured to receive the identification information of the mobile terminal.

Optionally, the transmitting component 54 includes: a query unit, which is configured to search for a network element corresponding to the IP address, wherein the network element saves a corresponding relationship between the IP address and the identification information of the mobile terminal; a transmitting unit, which is configured to transmit the request for acquiring the identification information of the mobile terminal corresponding to the IP address to the network element.

Optionally, the network element may save a corresponding relationship between Identification information of mobile terminals and IP addresses in a preset geographical scope, wherein the corresponding relationship is established after the mobile terminals access a network and are assigned with the IP addresses.

Optionally, the transmitting component 54 may be configured to transmit authentication information to the network element, and transmit, after the network element performs authentication successfully according to the authentication information, the request for acquiring the identification information of the mobile terminal corresponding to the IP address to the network element.

Optionally, in a condition that the message carrying the IP address of the mobile terminal is a request message for accessing a website, after receiving the identification information of the mobile terminal, the device may further include: a registration component, which is configured to take the identification information as a unique identification of the mobile terminal in the website.

Optionally, the device may further include: a generation component, which is configured to generate a random password and transmit the random password to the mobile terminal, wherein the mobile terminal logs in the website using the identification information of the mobile terminal and the random password.

Fig. 6 is a second structure diagram of a device for processing identification information according to the embodiment of the present disclosure. As shown in Fig. 6, the device includes:
a third receiving component 62, which is configured to receive a request for acquiring identification information of a mobile terminal corresponding to an IP address;
a searching component 64, which is configured to search for the identification information of the mobile terminal corresponding to the IP address according to a corresponding relationship between the IP address and the identification information of the mobile terminal;
a second transmitting component 66, which is configured to transmit the found identification information as a response message to the request.

Optionally, the corresponding relationship may be a corresponding relationship between Identification information of mobile terminals and IP addresses in a preset geographical scope, wherein the corresponding relationship is established after the mobile terminals access a network and are assigned with the IP addresses.

Optionally, the searching component 64 may include: an authentication unit, which is configured to receive authentication information; a query unit, which is configured to search for the identification information of the mobile terminal corresponding to the IP address according to the corresponding relationship, after authentication is performed successfully according to the authentication information.

A description is provided below in conjunction with an example embodiment.

This example embodiment provides a method for acquiring the number of a mobile terminal of a user when the user accesses a network in the NET mode to visit a mobile Internet website, so as to complete the functions of improving user's experience, such as realizing automatic registration, automatic login and micro-payment. In this example embodiment, the telecommunication operator maintains mobile basic network data of users, which may include the user's IMSI number (Subscriber Identity Module (SIM) card number), IMEI number, the number of the mobile terminal, home location and the like. When the user of the mobile terminal accesses a network, a corresponding relationship table between a dynamic IP address and the number of the mobile terminal can be dynamically generated based on a network element according to the basic data and the location of the network element. Optionally, network elements can be divided based on provinces, and each network element is given a different number. The user of a mobile terminal will obtain a unique IP address from the network element of an access network when accessing the network, wherein this IP address is also used to distinguish the region of the network element. The relationship between the IP address and the corresponding network element is maintained in the database of the mobile website in advance. In this way, when the IP address has been acquired, the network element region of the accessed network can be determined. In order to obtain the data in the corresponding relationship table between the IP address and the number of the mobile terminal, the acquisition method may be packaged as a network interface, and the number of the network element and the password serve as the validation parameter input during the calling of the interface.

In this example embodiment, the method for acquiring the number of a mobile terminal of a user and the process for realizing the automatic registration of mobile Internet website include steps which are described in detail as follows.
Step A: the user sets the access point of the mobile terminal to be NET, and requests to access a mobile Internet website for the first time.
Step B: after receiving the request, the website obtains a network IP address assigned to the mobile terminal according to the address attribute (Http protocol) in the request header of the mobile terminal user.
Step C: the name of the corresponding network element is queried in the database of the website according to the acquired IP address.
Step D: the number of the corresponding network element and access password maintained in advance are found from the configuration profile or database of the website, and the packaged query network interface is called using encrypted number and access password as input parameters.
Step E: after the interface has performed the authentication successfully, the IP address of the mobile terminal is used as an input parameter, and the interface looks up the corresponding relationship and then returns the number of the mobile terminal. After the website obtains the number of the mobile terminal of the user, the website may take the number of the mobile terminal as a unique user identifier to register into the database of the website; meanwhile the website generates a random password and transmits the random password to the user in a short message, which avoids the trouble of manually inputting registration information and completes the automatic registration for the user. If the user does not visit the website for the first time, automatic login can be realized for the user using the obtained number of the mobile terminal and the user's visit experience is improved.

If a mobile website provides a payment service, then, for example, the purchase of point cards used in applications or games from the Unicom WoStore (mobile terminal version) can be completed by micro-payment using telephone credits after the number of the mobile terminal of the user is acquired. In addition, statistic information is very important for the construction and long-term development of websites, the acquisition of the numbers of the mobile terminals of users can facilitate the detailed collection of user visits.

### Industrial Applicability

By receiving a message carrying an IP address of a mobile terminal, transmitting a request for acquiring identification information of the mobile terminal corresponding to the IP address and receiving the identification information of the mobile terminal, the embodiments of the present disclosure solve the problem of an inability to acquire the identification information of a mobile terminal in the relevant art and enables the acquisition of the identification information of the terminal.

The above are only the example embodiments of the present disclosure and not intended to limit the present disclosure. For those skilled in the art, various modifications and changes can be made to the present disclosure. Any modification, equivalent substitute and improvement made within the principle of the present disclosure are intended to be included within the scope of protection defined by the claims of the present disclosure.

## Claims

1. A method for processing identification information, comprising:
receiving a message carrying an Internet Protocol, IP, address of a mobile terminal;
transmitting a request for acquiring identification information of the mobile terminal corresponding to the IP address; and
receiving the identification information of the mobile terminal.

2. The method according to claim 1, wherein transmitting the request for acquiring the identification information of the mobile terminal corresponding to the IP address comprises:
searching for a network element corresponding to the IP address, wherein the network element saves a corresponding relationship between the IP address and the identification information of the mobile terminal;
transmitting the request for acquiring the identification information of the mobile terminal corresponding to the IP address to the network element.

3. The method according to claim 2, wherein the network element saves a corresponding relationship between Identification information of mobile terminals and IP addresses in a preset geographical scope, wherein the corresponding relationship is established after the mobile terminals access a network and are assigned with the IP addresses.

4. The method according to claim 2 or 3, wherein transmitting the request for acquiring the identification information of the mobile terminal corresponding to the IP address to the network element comprises:
transmitting authentication information to the network element;
after the network element performs authentication successfully according to the authentication information, transmitting the request for acquiring the identification information of the mobile terminal corresponding to the IP address to the network element.

5. The method according to any one of claims 1 to 4, wherein in a condition that the message carrying the IP address of the mobile terminal is a request message for accessing a website, after receiving the identification information of the mobile terminal, the method further comprises:
taking the identification information as a unique identification of the mobile terminal in the website.

6. The method according to claim 5, wherein after taking the identification information as the unique identification of the mobile terminal in the website, the method further comprises:
generating a random password and transmitting the random password to the mobile terminal, wherein the mobile terminal logs in the website using the identification information of the mobile terminal and the random password.

7. A method for processing identification information, comprising:
receiving a request for acquiring identification information of a mobile terminal corresponding to an Internet Protocol, IP, address;
searching for the identification information of the mobile terminal corresponding to the IP address according to a corresponding relationship between the IP address and the identification information of the mobile terminal;
transmitting the found identification information as a response message to the request.

8. The method according to claim 7, wherein the corresponding relationship is a corresponding relationship between Identification information of mobile terminals and IP addresses in a preset geographical scope, wherein the corresponding relationship is established after the mobile terminals access a network and are assigned with the IP addresses.

9. The method according to claim 7, wherein searching for the identification information of the mobile terminal corresponding to the IP address according to the corresponding relationship comprises:
receiving authentication information;
after authentication is performed successfully according to the authentication information, searching for the identification information of the mobile terminal corresponding to the IP address according to the corresponding relationship.

10. A device for processing identification information, comprising:
a first receiving component, which is configured to receive a message carrying an Internet Protocol, IP, address of a mobile terminal;
a transmitting component, which is configured to transmit a request for acquiring identification information of the mobile terminal corresponding to the IP address;
a second receiving component, which is configured to receive the identification information of the mobile terminal.

11. The device according to claim 10, wherein the transmitting component comprises:
a query unit, which is configured to search for a network element corresponding to the IP address, wherein the network element saves a corresponding relationship between the IP address and the identification information of the mobile terminal;
a transmitting unit, which is configured to transmit the request for acquiring the identification information of the mobile terminal corresponding to the IP address to the network element.

12. The device according to claim 11, wherein the network element saves a corresponding relationship between Identification information of mobile terminals and IP addresses in a preset geographical scope, wherein the corresponding relationship is established after the mobile terminals access a network and are assigned with the IP addresses.

13. The device according to claim 11 or 13, wherein the transmitting component is configured to transmit authentication information to the network element, and transmit, after the network element performs authentication successfully according to the authentication information, the request for acquiring the identification information of the mobile terminal corresponding to the IP address to the network element.

14. The device according to any one of claims 10 to 13, wherein in a condition that the message carrying the IP address of the mobile terminal is a request message for accessing a website, the device further comprises:
a registration component, which is configured to, after the identification information of the mobile terminal is received, take the identification information as a unique identification of the mobile terminal in the website.

15. The device according to claim 14, further comprising:
a generation component, which is configured to generate a random password and transmit the random password to the mobile terminal, wherein the mobile terminal logs in the website using the identification information of the mobile terminal and the random password.

16. A device for processing identification information, comprising:
a third receiving component, which is configured to receive a request for acquiring identification information of a mobile terminal corresponding to an Internet Protocol, IP, address;
a searching component, which is configured to search for the identification information of the mobile terminal corresponding to the IP address according to a corresponding relationship between the IP address and the identification information of the mobile terminal;
a second transmitting component, which is configured to transmit the found identification information as a response message to the request.

17. The device according to claim 16, wherein the corresponding relationship is a corresponding relationship between Identification information of mobile terminals and IP addresses in a preset geographical scope, wherein the corresponding relationship is established after the mobile terminals access a network and are assigned with the IP addresses.

18. The device according to claim 16, wherein the searching component comprises:
an authentication unit, which is configured to receive authentication information;
a query unit, which is configured to, after authentication is performed successfully according to the authentication information, search for the identification information of the mobile terminal corresponding to the IP address according to the corresponding relationship.
